# EUROPEAN PATENT SPECIFICATION

(11) **EP 2 138 804 B1**
(45) Date of publication and mention of the grant of the patent: **23.09.2015**
(21) Application number: 09156271.0
(22) Date of filing: 26.03.2009
(51) Int. Cl.: G01C 21/36, G08G 1/0969, G09B 29/10

(54) **Method and apparatus for displaying map based on course direction**
Verfahren und Vorrichtung zur Anzeige einer Karte auf Basis einer Kursrichtung
Procédé et appareil pour afficher une carte basée sur la direction

(30) Priority: 25.06.2008 KR 20080060229
(43) Date of publication of application: 30.12.2009
(73) Proprietor: Samsung Electronics Co., Ltd., Suwon-si, Gyeonggi-do, 443-742 (KR)
(72) Inventor: Lee, Joong-hwan, Gyeonggi-do (KR); Ko, Byeong-seob, Gyeonggi-do (KR)
(74) Representative: Taor, Simon Edward William

(56) References cited:
- EP-A1- 1 014 038
- EP-A2- 1 416 252
- JP-A- 6 331 367
- JP-A- 10 222 060
- US-A1- 2007 078 599
- US-A1- 2008 091 349
- US-A1- 2008 177 462

## Description

The present invention relates to a map displaying apparatus and method, and more particularly, to a map displaying apparatus and method by which an area in a course direction is more widely displayed on a screen.

Currently, with the development of information technology (IT), navigation terminals have become widely used. A navigation system calculates a position of a local navigation terminal based on signals received from a plurality of global positioning system (GPS) satellites and displays a current position and a course to a destination of the navigation terminal on a screen.

The navigation terminals are more widely used in cars that frequently search for a course. In order to allow a driver of a car to check information on a current position and a course to a destination as rapidly as possible while driving, the information has to be appropriately displayed on a screen of the navigation terminal.

Conventional navigation terminals use various map displaying methods in order to allow the driver to easily and rapidly check the information. An example of the map displaying methods include a head-up mode method in which a map is displayed so that a current movement direction of a driver always corresponds to an upward direction of a screen. Another example is a north-up mode method in which a map is displayed so that an actual north direction always corresponds to an upward direction of a screen. A further example is a bird's-eye view mode method in which a map is three-dimensionally displayed so that a driver can easily compare an actual driving environment to the map displayed on a screen.

However, the above map displaying methods do not display a certain area of the map that the driver may want to see on a screen.

JP 6331367 and EP1014038 disclose map display devices.

Aspects of the present invention provide a map displaying apparatus and method thereof whereby an area or more interest to a user is displayed on a screen, and a computer readable recording medium having recorded thereon a computer program for executing the map displaying method.

According to the present invention, there is provided a map displaying method according to claim 1 and a map displaying apparatus according to claim 4. According to an aspect of the present invention, there is provided a map displaying method to display a map on a screen, the map displaying method including: determining a course direction of an object at a current position of the map; moving a first centre of a first area of the map is set based on the current position, by a predetermined distance in the course direction so as to determine a second centre; and displaying a second area of the map on the screen having the second centre as a centre thereof.

The determining of the course direction includes setting an analysis area to analyze the course direction at the current position; and analyzing a course included in the analysis area and determining a direction of the course included in the analysis area as the course direction.

According to an aspect of the present invention, the direction of the course included in the analysis area may be a direction of the course from the current position or the first centre to a predetermined destination.

The determining of the direction of the course included in the analysis area includes determining a point where a course from the current position or the first centre to the predetermined destination intersects a boundary of the analysis area; and determining a direction from the current position or the first centre to the point on the boundary of the analysis area as the course direction.

According to an aspect of the present invention, the moving of the first centre may include moving the first centre by a predetermined distance in only a vertical or a horizontal direction based on the course direction so as to determine the second centre.

According to another aspect of the present invention, there is provided a map displaying apparatus to display a map on a screen, the apparatus including: a course direction determination unit to determine a course direction at a current position of a map; a centre movement unit to move a first centre of a first area that is set based on the current position, by a predetermined distance in the course direction so as to determine a second centre; and a display unit to display a second area having the second centre as a centre thereof.

According to another aspect of the present invention, there is provided a computer readable recording medium having recorded thereon a computer program for executing the map displaying method.

Additional aspects and/or advantages of the invention will be set forth in part in the description which follows and, in part, will be obvious from the description, or may be learned by practice of the invention.

These and/or other aspects and advantages of the invention will become apparent and more readily appreciated from the following description of the embodiments, taken in conjunction with the accompanying drawings of which:
FIG. 1 is a block diagram of a map displaying apparatus according to an embodiment of the present invention;
FIGs. 2A through 2C are diagrams to describe a method of determining a course direction, according to an embodiment of the present invention;
FIGs. 3A through 3C are diagrams to describe a method of determining a course direction, according to another embodiment of the present invention;
FIGs. 4A through 4C are diagrams to describe methods of moving an area displayed on a screen, according to embodiments of the present invention;
FIG. 5 is a diagram to describe a method of moving an area displayed on a screen in accordance with a speed of movement, according to an embodiment of the present invention;
FIG. 6 is a flowchart of a map displaying method according to an embodiment of the present invention; and
FIG. 7 is a flowchart of a method of calling a centre movement operation, according to an embodiment of the present invention.

Reference will now be made in detail to the embodiments of the present invention, examples of which are illustrated in the accompanying drawings, wherein like reference numerals refer to the like elements throughout. The embodiments are described below in order to explain the present invention by referring to the figures.

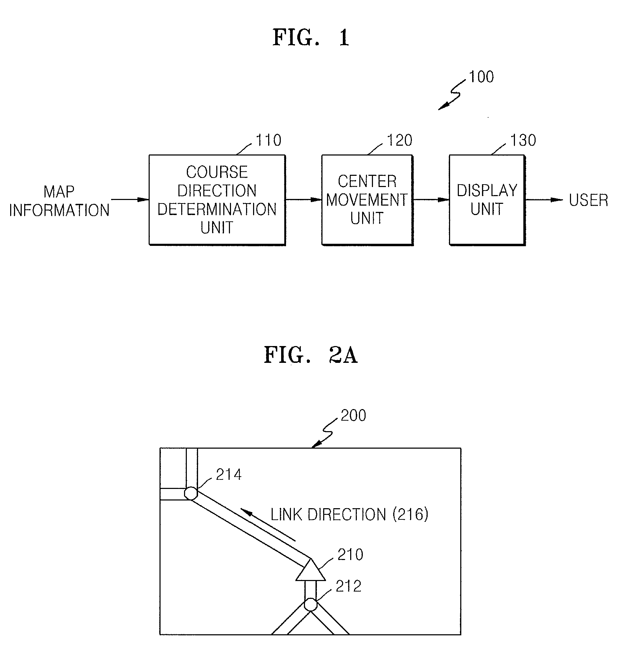

FIG. 1 is a block diagram of a map displaying apparatus 100 according to an embodiment of the present invention. Referring to FIG. 1, the map displaying apparatus 100 includes a course direction determination unit 110, a centre movement unit 120, and a display unit 130. While not restricted thereto, the apparatus 100 can be included in a car, a telephone, a personal media player, a portable computer, or as a stand alone GPS unit. Further, while not shown, it is understood that the apparatus 100 can include a GPS device to determine the location and a storage device to store the map information.

The course direction determination unit 110 determines a course direction at a current position in a first area that is set based on the current position. Accordingly, a user seeing a map displayed on a screen (such as the display unit 130) of a mobile device (such as a navigation terminal) can view information on an area that the user is going to move to, rather than information on an area that the user is moving from. Such information can include information on road conditions and points of interest (POIs) of the area that the user is going to move to. The area that the user is going to move to is determined in accordance with the course direction at the current position determined by the course direction determination unit 110. The direction of a course, that is included in a predetermined analysis area, from the current position to a destination is determined as the course direction at the current position. A method of determining a course direction will now be described in detail with reference to FIGs. 2A through 2C.

FIGs. 2A through 2C are diagrams to describe a method of determining a course direction, according to comparative examples. The method illustrated in FIGs. 2A through 2C determines a link direction at a current position as the course direction. A link is a single course, or route, between two nodes and, thus, the link direction is a movement direction of a user.

FIG. 2A illustrates a head-up mode. The head-up mode displays a map so that the movement direction of the user always corresponds to an upward direction of a first area 200 on a screen that is set based on the current position. If a link from a node A 212 to a node B 214 is as illustrated in FIG. 2A, a link direction 216 is determined as the course direction at the current position. Here, the first area 200 is an area displayed on the screen when the map is displayed, regardless of the movement direction of the user (i.e., the course direction at the current position). In general, the current position is displayed on a vertical line that intersects the screen on which the map is displayed, and the first area 200 is set based on the current position.

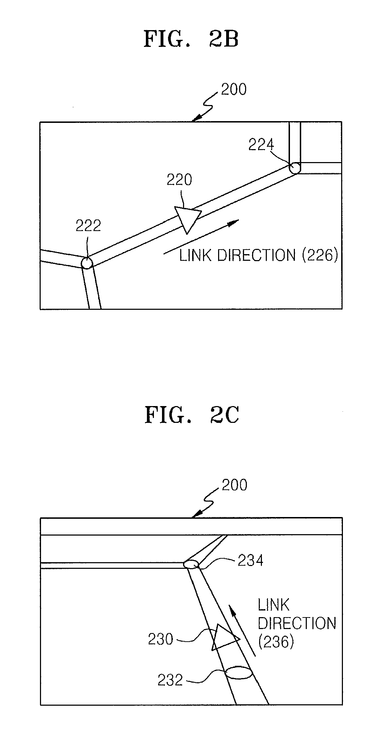

FIG. 2B illustrates a north-up mode. The north-up mode displays the map so that an actual north direction always corresponds to the upward direction of the first area 200 on the screen. If a link from a node A 222 to a node B 224 is as illustrated in FIG. 2B, a link direction 226 is determined as the course direction at the current position.

FIG. 2C illustrates a bird's-eye view mode. The bird's-eye view mode three-dimensionally displays the map. If a link from a node A 232 to a node B 234 is as illustrated in FIG. 2C, a link direction 236 is determined as the course direction at the current position.

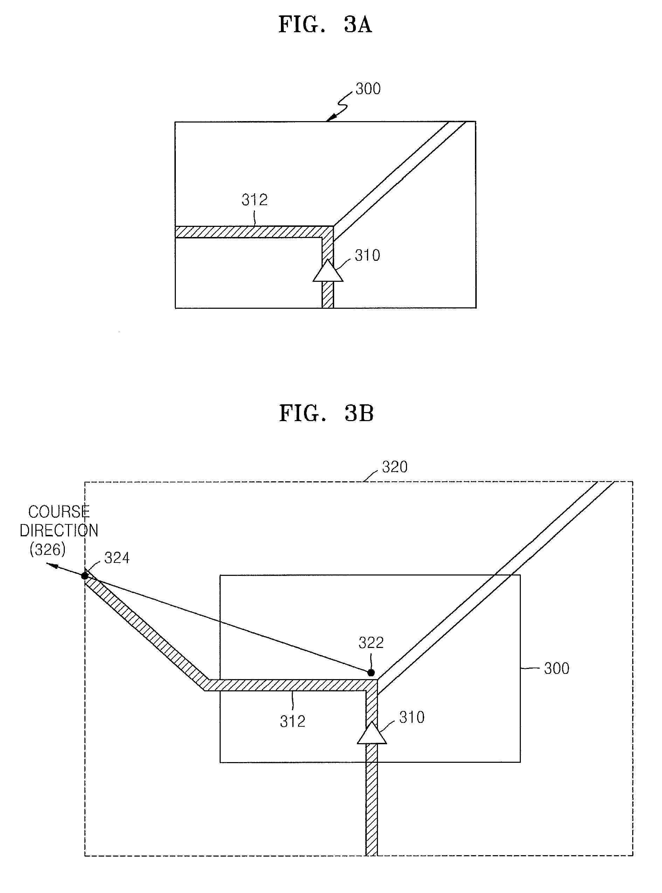

FIGs. 2A through 2C show cases when a link direction at a current position is determined as a course direction. However, if a course from the current position to a destination is detected, a direction of the detected course may be determined as the course direction at the current position. A method of determining a course direction when a course from a current position to a destination is detected will now be described in detail with reference to FIGs. 3A through 3C.

FIGs. 3A through 3C are diagrams to describe a method of determining a course direction, according to the present invention. Referring to FIG. 3A, a course 312 (represented as a shaded portion), also referred to herein as a route, from a current position 310 to a destination is detected in a first area 300.

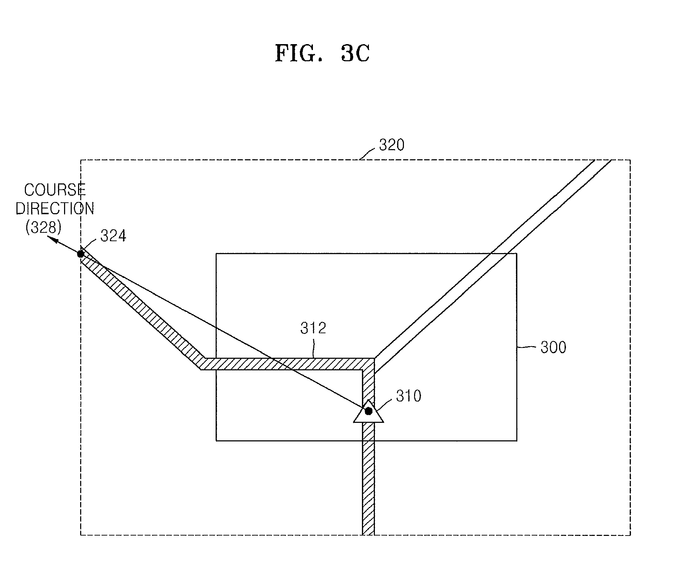

Referring to FIG. 3B, a direction of the course 312 from the current position 310 to the destination, which is included in an analysis area 320, is determined as the course direction. The course direction determination unit 110 illustrated in FIG. 1 sets the analysis area 320 in order to analyse the course direction at the current position 310. In FIGs. 3B and 3C, a large area including the first area 300 that is set based on the current position 310 is set as the analysis area 320. However, it is understood by those of ordinary skill in the art that the same area as the first area 300 or a smaller area included in the first area 300 may also be set as the analysis area 320 according to other aspects.

When the analysis area 320 is set, the course direction determination unit 110 sets a direction 326 from a centre 322 of the first area 300 to a point 324 where the detected course 312 intersects a boundary of the analysis area 320, as the course direction 326.

Alternatively, as illustrated in FIG. 3C, a direction 328 from the current position 310 (as opposed to the centre 322 of the first area 300 as shown in FIG. 3B) to the point 324 where the detected course 312 meets the boundary of the analysis area 320, may be determined as the course direction 326. Accordingly, if the centre 322 of the first area 300 differs from the current position 310, the direction 326 illustrated in FIG. 3B differs from the direction 328 illustrated in FIG. 3C. Although FIGs. 3A through 3C are described based on a head-up mode, it is understood that the same method may be applied to a north-up mode or a bird's-eye view mode shown in FIGs. 2B and 2C.

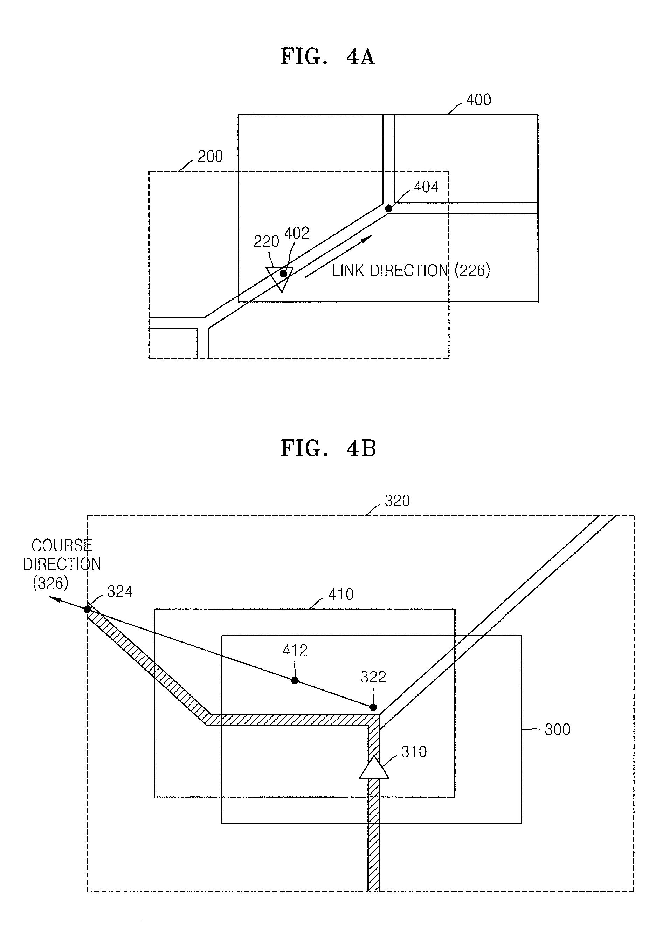

Referring back to FIG. 1, the centre movement unit 120 moves a first centre of the first area to a second centre in accordance with the course direction at the current position, determined by the course direction determination unit 110. The display unit 130 displays a second area having the second centre on a screen. Thus, the first area displayed on the screen moves to the second area. A method of moving an area displayed on a screen will now be described in detail with reference to FIGs. 4A through 4C.

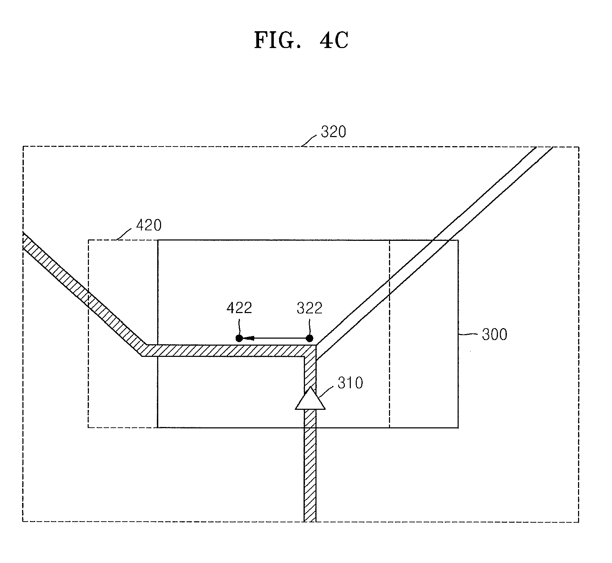

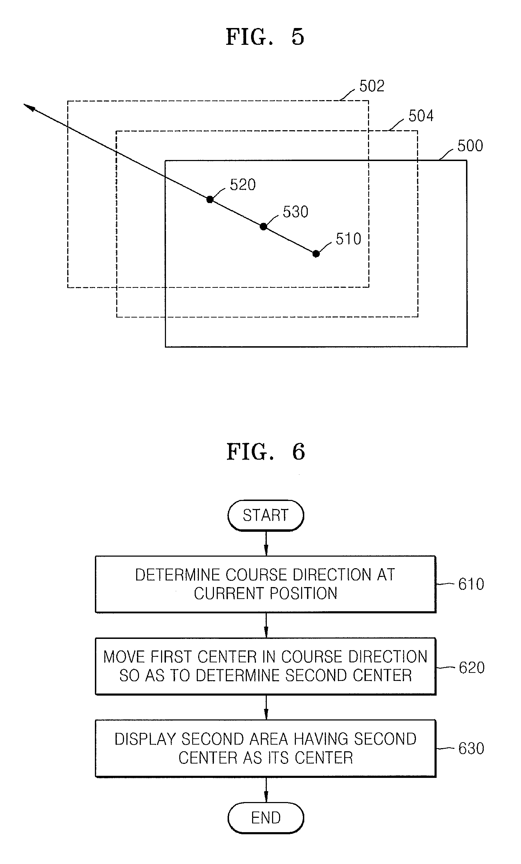

FIGs. 4B and 4C are diagrams to describe methods of moving an area displayed on a screen, according to embodiments of the present invention. FIG. 4A illustrates as a comparative example a method of moving an area displayed on a screen when a course direction at a current position 220 is determined as illustrated in FIG. 2B. Referring to FIG. 4A, the centre movement unit 120 moves a first centre 402 of a first area 200 that is set based on the current position 220, in a link direction 226 that is determined by the course direction determination unit 110, so as to determine a second centre 404. A movement distance from the first centre 402 to the second centre 404 may differ in accordance with embodiments of the present invention. In particular, the movement distance can vary as long as the current position 220 can be displayed on the screen. Furthermore, the movement distance may adaptively differ in accordance with a user's speed of movement, which will be described in detail later with reference to FIG. 5. When the second centre 404 is determined, the display unit 130 displays a second area 400 having the second centre 404 as its centre, on the screen. Although FIG. 4A is described based on a north-up mode, it is understood that the same method may be applied to a head-up mode or a bird's-eye view mode.

FIG. 4B illustrates a method of moving an area displayed on a screen when a course direction at a current position 310 is determined as illustrated in FIG. 3B. Referring to FIG. 4B, the centre movement unit 120 moves a first centre 322 of a first area 300 that is set based on the current position 310, in a direction 326 that is determined as the course direction in FIG. 3B, so as to determine a second centre 412. A movement distance from the first centre 322 to the second centre 412 can vary, according to aspects of the present invention, as long as the current position 310 can be displayed on the screen. Although FIG. 4B is described based on the direction 326 illustrated in FIG. 3B, the same method may be applied when the direction 328 illustrated in FIG. 3C is determined as the course direction. For example, the first centre 322 of the first area 300 may move by a predetermined distance in the direction 328 illustrated in FIG. 3C instead of the direction 326 illustrated in FIG. 3B, so as to determine a different second centre. Accordingly, when the second centre 412 is determined, the display unit 130 displays a second area 410 having the second centre 412 as its centre, on the screen. Although FIG. 4B is described based on a head-up mode, it is understood that the same method may be applied to a north-up mode or a bird's-eye view mode.

FIG. 4C illustrates a method of moving an area displayed on a screen, according to another embodiment of the present invention. Referring to FIG. 4C, the centre movement unit 120 moves a first centre 322 of a first area 300 in only a vertical or a horizontal direction based on a course direction at a current position 310. For example, in FIG. 4C, the centre movement unit 120 moves the first centre 322 in only the horizontal direction so as to determine a second centre 422.

Specifically, if the course direction is a vertical or a horizontal direction, the first centre 322 respectively moves in the vertical or the horizontal direction. However, if the course direction is a top-left direction as illustrated in FIG. 3B or FIG. 3C, the first centre 322 does not move in a top-left direction in the current embodiment. Based on a vertical or horizontal component of the course direction, the first centre 322 moves in only the vertical or the horizontal direction so as to determine the second centre 422.

The method illustrated in FIG. 4C may be applied to a head-up mode, a north-up mode, or a bird's-eye view mode. However, according to other aspects, the first centre 322 may move based on only a horizontal component of the course direction, so as to determine the second centre 422, in the head-up mode or the bird's-eye view mode.

FIG. 5 is a diagram to describe a method of moving an area displayed on a screen in accordance with a speed of movement, according to an embodiment of the present invention. Referring to FIG. 5, a movement distance of a first centre 510 may differ in accordance with a user's speed of movement. If the user's speed of movement is relatively high (for example, greater than a predetermined speed), the first centre 510 moves to a second centre 520 so that the user can view information on an area that is relatively farther from the current position in a movement direction. As illustrated, a distance between the first centre 510 and the second centre 520 is relatively large. Accordingly, a displacement between a first area 500 having the first centre 510 as its centre and a second area 502 to be displayed on the screen is also respectively large.

On the other hand, if the user's speed of movement is low (for example, less than a predetermined speed), the first centre 510 moves to a second centre 530 so that the user can view information on an area that is relatively closer to the current position in the movement direction. As illustrated, a distance between the first centre 510 and the second centre 530 is relatively small. Accordingly, a displacement between the first area 500 having the first centre 510 as its centre and a second area 504 to be displayed on the screen is smaller than the case when the user's speed of movement is high.

FIG. 6 is a flowchart of a map displaying method according to an embodiment of the present invention. Referring to FIG. 6, a map display apparatus determines a course direction at a current position in operation 610. As described above with reference to FIGs. 2A through 2C and 3A through 3C, a link direction at the current position or a direction of a course, that is included in a predetermined analysis area, from the current position to a destination is determined as the course direction.

The map display apparatus moves a first centre of a first area that is set based on the current position by a predetermined distance in the course direction that is determined in operation 610, so as to determine a second centre in operation 620. The first area is set regardless of the course direction at the current position and is an area displayed on a screen when a map is displayed in a display mode (such as a head-up mode, a north-up mode, or a bird's-eye view mode).

Accordingly, the map display apparatus displays a second area having the second centre that is determined in operation 620, as its centre on the screen in operation 630. The second area is set based on the second centre that is moved from the first centre of the first area, and is displayed on the screen. Since the second centre is determined based on the course direction at the current position, the second area is moved from the first area by the predetermined distance in the course direction.

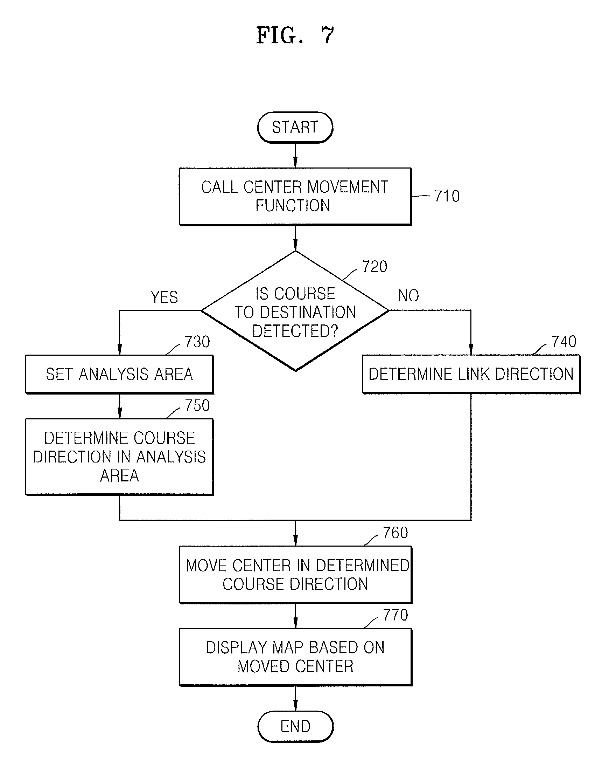

FIG. 7 is a flowchart of a method of calling a centre movement operation, according to an embodiment of the present invention. In FIG. 7, a method of applying a map displaying operation is illustrated, in which an area that is moved from a first area by a predetermined distance based on a course direction at a current position is displayed on a screen as described above with reference to FIGs. 1, 2A through 2C, 3A through 3C, 4A through 5C, 5, and 6.

Referring to FIG. 7, a map display apparatus according to an embodiment of the present invention calls the centre movement operation in operation 710. Then, the map display apparatus determines whether a course from a current position to a destination is detected in operation 720. Different methods of determining a course direction at the current position can be used according to whether the course from the current position to the destination is detected.

If it is determined that the course from the current position to the destination is detected (operation 720), an analysis area is set in order to analyze the course in operation 730. When the analysis area is set (operation 730), the map display apparatus determines the course direction in the analysis area in operation 750. For example, a point where the detected course intersects a boundary of the analysis area is determined and a direction from the current position or a first centre of the first area to the determined point may be determined as the course direction.

If it is determined that the course from the current position to the destination is not detected (operation 720), the map display apparatus determines a link direction as the course direction in operation 740. A link is a single course between two nodes and thus the link direction is a movement direction of a user on the link. Accordingly, the link direction is determined as the course direction.

The map display apparatus moves the first centre of the first area in the determined course direction (operation 740 or 750), so as to determine a second centre in operation 760. Operation 760 corresponds to operation 620 illustrated in FIG. 6. Accordingly, the map display apparatus displays a second area having the second centre as its centre, on the screen, in operation 770.

The method illustrated in FIG. 7 is exemplarily described and it will be easily understood by those of ordinary skill in the art that various other methods may also be used. Furthermore, it is understood that the centre movement operation may be selectively used. For example, the map display apparatus may or may not use the centre movement operation in accordance with a user's input. Also, if an exceptional case happens (for example, if the user departs from the course), the centre movement operation may not be used and the first area that is set based on the current position may be displayed on the screen. In this case, according to an embodiment of the present invention, the centre movement operation may not be used if the user departs from the course by more than a predetermined distance. Alternatively, if the exceptional case happens, the centre movement operation may be re-called.

As described above, according to aspects of the present invention, an area in a course direction may be more widely displayed on a screen and, thus, a user may rapidly check information on an area that the user is going to. Accordingly, a driver may safely drive a car by easily predicting a course.

While aspects of the present invention have been particularly shown and described with reference to embodiments thereof, it will be understood by those of ordinary skill in the art that various changes in form and details may be made therein without departing from the scope of the invention as defined by the appended claims. Also, aspects of the present invention can also be embodied as computer-readable codes on a computer-readable recording medium. The computer-readable recording medium is any data storage device that can store data that can be thereafter read by a computer system. Examples of the computer-readable recording medium include read-only memory (ROM), random-access memory (RAM), CD-ROMs, magnetic tapes, floppy disks, and optical data storage devices. The computer-readable recording medium can also be distributed over network-coupled computer systems so that the computer-readable code is stored and executed in a distributed fashion.

Although a few embodiments of the present invention have been shown and described, it would be appreciated by those skilled in the art that changes may be made in this embodiment without departing from the principles of the invention, the scope of which is defined in the claims.

## Claims

1. A map displaying method to display a map on a screen, the map displaying method comprising:
determining a course direction (326, 328) of an object at a current position (310) on the map;
moving a first centre (322) of a first area of the map, displayed on the screen, that is based on the current position, by a predetermined distance in the determined course direction so as to determine a second centre (412, 422); and
displaying a second area of the map on the screen having the determined second centre as the centre thereof,
**characterized in that**
the determining of the course direction (326, 328) comprises:
setting an analysis area (320);
analyzing a course (312) included in the analysis area to determine a crossing point (324) at which the course to a destination (312) crosses the boundary of the analysis area, wherein the course within the analysis area comprises a plurality of nodes connected by links each having a link direction, wherein at least two links have different link directions; and
determining the course direction (326, 328) as a straight line between the current position (310) and the crossing point (324) or between the first centre (322) and the crossing point (324).

2. The map displaying method according to claim 1, wherein the moving of the first centre comprises determining, based on the course direction, whether to move the first centre in only a vertical or in only a horizontal direction and moving the first centre by the predetermined distance in only a vertical or a horizontal direction so as to determine the second centre.

3. The map displaying method according to claim 1 or 2, wherein the moving of the first centre comprises:
moving the first centre by a first distance in the course direction when a moving speed of the object is a first speed; and
moving the first centre by a second distance, less than the first distance, when the moving speed of the object is a second speed, less than the first speed.

4. A map displaying apparatus for displaying a map on a screen, the map displaying apparatus comprising:
a course direction determination unit to determine a course direction (326, 328) of an object at a current position (310) on the map;
a centre movement unit to move a first centre (322) of a first area of the map, that is based on the current position, displayed on the screen, by a predetermined distance in the determined course direction so as to determine a second centre (412, 422); and
a display unit to display a second area of the map on the screen having the determined second centre as the centre thereof,
**characterized in that**
the course direction determination unit is arranged to set an analysis area (320) and to analyze a course (312) included in the analysis area to determine a crossing point (324) at which the course to a destination (312) crosses the boundary of the analysis area, wherein the course within the analysis area comprises a plurality of nodes connected by links each having a link direction, wherein at least two links have different link directions; and
is arranged to determine the course direction (326, 328) as a straight line between the current position (310) and the crossing point (324) or between the first centre (322) and the crossing point (324).

5. The map displaying apparatus according to claim 4, wherein the centre movement unit is arranged to determine, based on the course direction, whether to move the first centre in only a vertical or in only a horizontal direction and move the first centre by the predetermined distance in only a vertical or a horizontal direction so as to determine the second centre.

6. The map displaying apparatus according to claim 4 or 5, wherein the centre movement unit is arranged to move the first centre by a first distance in the course direction when a moving speed of the object is a first speed, and to move the first centre by a second distance, less than the first distance, when the moving speed of the object is a second speed, less than the first speed.

7. A computer program which, when executed by a processor, is arranged to perform a method according to any one of claims 1 to 3.

## Patentansprüche

1. Verfahren zum Anzeigen einer Karte auf einem Bildschirm, wobei das Verfahren zum Anzeigen einer Karte Folgendes umfasst:
Bestimmen einer Kursrichtung (326, 328) eines Gegenstands an einer aktuellen Position (310) auf der Karte;
Verschieben eines ersten Mittelpunkts (322) eines ersten auf dem Bildschirm angezeigten Bereichs der Karte, der auf der aktuellen Position basiert, um eine vorherbestimmte Strecke in der bestimmten Kursrichtung, um einen zweiten Mittelpunkt (412, 422) zu bestimmen; und
Anzeigen eines zweiten Bereichs der Karte auf dem Bildschirm, der den bestimmten zweiten Mittelpunkt als dessen Mittelpunkt aufweist, **dadurch gekennzeichnet, dass**:
das Bestimmen der Kursrichtung (326, 328) Folgendes umfasst:
Einstellen eines Analysebereichs (320);
Analysieren eines in dem Analysebereich enthaltenen Kurses (312), um einen Kreuzungspunkt (324) zu bestimmen, an dem der Kurs zu einem Ziel (312) die Grenze des Analysebereichs kreuzt, wobei der Kurs in dem Analysebereich eine Vielzahl von Knoten umfasst, die durch Verbindungen mit jeweils einer Verbindungsrichtung verbunden sind, wobei mindestens zwei Verbindungen unterschiedliche Verbindungsrichtungen aufweisen; und
Bestimmen der Kursrichtung (326, 328) als gerade Linie zwischen der aktuellen Position (310) und dem Kreuzungspunkt (324) oder zwischen dem ersten Mittelpunkt (322) und dem Kreuzungspunkt (324).

2. Verfahren zum Anzeigen einer Karte nach Anspruch 1, wobei das Verschieben des ersten Mittelpunkts das Bestimmen, basierend auf der Kursrichtung, ob der erste Mittelpunkt in nur einer vertikalen oder in nur einer horizontalen Richtung verschoben werden soll und das Verschieben des ersten Mittelpunkts um die vorherbestimmte Strecke in nur einer vertikalen oder einer horizontalen Richtung umfasst, um den zweiten Mittelpunkt zu bestimmen.

3. Verfahren zum Anzeigen einer Karte nach Anspruch 1 oder 2, wobei das Verschieben des ersten Mittelpunkts Folgendes umfasst:
Verschieben des ersten Mittelpunkts um eine erste Strecke in der Kursrichtung, wenn es sich bei einer Bewegungsgeschwindigkeit des Gegenstands um eine erste Geschwindigkeit handelt; und
Verschieben des ersten Mittelpunkts um eine zweite Strecke, die kleiner ist als die erste Strecke, wenn es sich bei der Bewegungsgeschwindigkeit des Gegenstands um eine zweite Geschwindigkeit handelt, die kleiner ist als die erste Geschwindigkeit.

4. Vorrichtung zum Anzeigen einer Karte auf einem Bildschirm, wobei die Vorrichtung zum Anzeigen einer Karte Folgendes umfasst:
eine Kursrichtungs-Bestimmungseinheit zum Bestimmen einer Kursrichtung (326, 328) eines Gegenstands an einer aktuellen Position (310) auf der Karte;
eine Mittelpunkts-Verschiebungseinheit zum Verschieben eines ersten Mittelpunkts (322) eines ersten auf dem Bildschirm angezeigten Bereichs der Karte, der auf der aktuellen Position basiert, um eine vorherbestimmte Strecke in der bestimmten Kursrichtung, um einen zweiten Mittelpunkt (412, 422) zu bestimmen; und
eine Anzeigeeinheit zum Anzeigen eines zweiten Bereichs der Karte auf dem Bildschirm, der den bestimmten zweiten Mittelpunkt als dessen Mittelpunkt aufweist, **dadurch gekennzeichnet, dass**:
die Kursrichtungs-Bestimmungseinheit dazu eingerichtet ist, einen Analysebereich (320) einzustellen und einen in dem Analysebereich enthaltenen Kurs (312) zu analysieren, um einen Kreuzungspunkt (324) zu bestimmen, an dem der Kurs zu einem Ziel (312) die Grenze des Analysebereichs kreuzt, wobei der Kurs in dem Analysebereich eine Vielzahl von Knoten umfasst, die durch Verbindungen mit jeweils einer Verbindungsrichtung verbunden sind, wobei mindestens zwei Verbindungen unterschiedliche Verbindungsrichtungen aufweisen; und
dazu eingerichtet ist, die Kursrichtung (326, 328) als gerade Linie zwischen der aktuellen Position (310) und dem Kreuzungspunkt (324) oder zwischen dem ersten Mittelpunkt (322) und dem Kreuzungspunkt (324) zu bestimmen.

5. Vorrichtung zum Anzeigen einer Karte nach Anspruch 4, wobei die Mittelpunkts-Verschiebungseinheit dazu eingerichtet ist, basierend auf der Kursrichtung zu bestimmen, ob der erste Mittelpunkt in nur einer vertikalen oder in nur einer horizontalen Richtung verschoben werden soll und den ersten Mittelpunkts um die vorherbestimmte Strecke in nur einer vertikalen oder einer horizontalen Richtung zu verschieben, um den zweiten Mittelpunkt zu bestimmen.

6. Vorrichtung zum Anzeigen einer Karte nach Anspruch 4 oder 5, wobei die Mittelpunkts-Verschiebungseinheit dazu eingerichtet ist, den ersten Mittelpunkt um eine erste Strecke in der Kursrichtung zu verschieben, wenn es sich bei einer Bewegungsgeschwindigkeit des Gegenstands um eine erste Geschwindigkeit handelt und den ersten Mittelpunkt um eine zweite Strecke, die kleiner ist als die erste Strecke, zu verschieben, wenn es sich bei der Bewegungsgeschwindigkeit des Gegenstands um eine zweite Geschwindigkeit handelt, die kleiner ist als die erste Geschwindigkeit.

7. Computerprogramm, das, wenn es von einem Prozessor ausgeführt wird, dazu eingerichtet ist, ein Verfahren nach einem der Ansprüche 1 bis 3 auszuführen.

## Revendications

1. Procédé d'affichage d'une carte, servant à afficher une carte sur un écran, ledit procédé d'affichage d'une carte comprenant les étapes consistant à :
déterminer une direction de déplacement (326, 328) d'un objet à une position actuelle (310) sur la carte ;
décaler un premier centre (322) d'une première zone de la carte affichée sur l'écran, qui est basée sur la position actuelle, d'une distance prédéterminée dans la direction de déplacement déterminée afin de déterminer un deuxième centre (412, 422) ; et
afficher sur l'écran une deuxième zone de la carte ayant pour centre le deuxième centre déterminé,
**caractérisé en ce que** la détermination de la direction de déplacement (326, 328) comprend les étapes consistant à :
définir une zone d'analyse (320) ;
analyser un déplacement (312) compris dans la zone d'analyse afin de déterminer un point de croisement (324) à partir duquel le déplacement vers une destination (312) croise la limite de la zone d'analyse, le déplacement dans la zone d'analyse comprenant une pluralité de noeuds connectés par des liaisons ayant chacune un sens de liaison, au moins deux liaisons ayant des sens de liaison différents ; et
déterminer la direction de déplacement (326, 328) sous la forme d'une ligne droite entre la position actuelle (310) et le point de croisement (324) ou entre le premier centre (322) et le point de croisement (324).

2. Procédé d'affichage d'une carte selon la revendication 1, dans lequel le décalage du premier centre comprend les étapes consistant à déterminer, sur la base de la direction de déplacement, s'il y a lieu de décaler ou non le premier centre seulement dans un sens vertical ou seulement dans un sens horizontal, et décaler le premier centre de la distance prédéterminée uniquement dans un sens vertical ou horizontal afin de déterminer le deuxième centre.

3. Procédé d'affichage d'une carte selon la revendication 1 ou la revendication 2, dans lequel le décalage du premier centre comprend les étapes consistant à :
décaler le premier centre d'une première distance dans la direction de déplacement lorsqu'une vitesse de déplacement de l'objet est une première vitesse ; et
décaler le premier centre d'une deuxième distance inférieure à la première lorsque la vitesse de déplacement de l'objet est une deuxième vitesse inférieure à la première.

4. Appareil d'affichage d'une carte, destiné à afficher une carte sur un écran, ledit appareil d'affichage d'une carte comprenant :
une unité de détermination de direction de déplacement servant à déterminer une direction de déplacement (326, 328) d'un objet à une position actuelle (310) sur la carte ;
une unité de décalage de centre servant à décaler un premier centre (322) d'une première zone de la carte, qui est basée sur la position actuelle, affichée sur l'écran, d'une distance prédéterminée dans la direction de déplacement déterminée afin de déterminer un deuxième centre (412, 422) ; et
une unité d'affichage servant à afficher sur l'écran une deuxième zone de la carte ayant pour centre le deuxième centre déterminé,
**caractérisé en ce que** l'unité de détermination de direction de déplacement est agencée pour définir une zone d'analyse (320) et pour analyser un déplacement (312) compris dans la zone d'analyse afin de déterminer un point de croisement (324) à partir duquel le déplacement vers une destination (312) croise la limite de la zone d'analyse, dans lequel le déplacement dans la zone d'analyse comprend une pluralité de noeuds connectés par des liaisons ayant chacune un sens de liaison, au moins deux liaisons ayant des sens de liaison différents ; et
est agencé pour déterminer la direction de déplacement (326, 328) sous la forme d'une ligne droite entre la position actuelle (310) et le point de croisement (324) ou entre le premier centre (322) et le point de croisement (324).

5. Appareil d'affichage d'une carte selon la revendication 4, dans lequel l'unité de décalage de centre est agencée pour déterminer, sur la base de la direction de déplacement, s'il y a lieu de décaler ou non le premier centre uniquement dans un sens vertical ou uniquement dans un sens horizontal, et pour décaler le premier centre de la distance prédéterminée uniquement dans un sens vertical ou dans un sens horizontal afin de déterminer le deuxième centre.

6. Appareil d'affichage d'une carte selon la revendication 4 ou la revendication 5, dans lequel l'unité de décalage de centre est agencée pour décaler le premier centre d'une première distance dans la direction de déplacement lorsqu'une vitesse de déplacement de l'objet est une première vitesse et pour décaler le premier centre d'une deuxième distance, inférieure à la première, lorsque la vitesse de déplacement de l'objet est une deuxième vitesse inférieure à la première.

7. Programme informatique qui, lorsqu'il est exécuté par un processeur, est agencé pour mettre en oeuvre un procédé selon l'une quelconque des revendications 1 à 3.
